# EUROPEAN PATENT APPLICATION

(11) **EP 2 017 229 A1**
(43) Date of publication of application: **21.01.2009**
(21) Application number: 08012963.8
(22) Date of filing: 17.07.2008
(51) Int. Cl.: C02F 1/461, C02F 1/467

(54) **Water treatment device and water treatment method**

(30) Priority: 17.07.2007 JP 2007186074
(71) Applicant: Sanyo Electric Co., Ltd., Osaka 570-8677 (JP)
(72) Inventor: Sumida, Yasuteru, Gunma, 370-0535 (JP); Umezawa, Hiroyuki, Gunma, 373-0806 (JP); Kuwai, Yasuyuki, Gunma, 370-0533 (JP); Ogawa, Yui, Gunma (JP); Oe, Hana, Gunma, 373-0861 (JP)
(74) Representative: Riesenberg, Axel

(57) **Abstract**

Provided is a water treatment device which efficiently removes an oxidant from water to be treated. The water treatment device according to the present invention includes: a fiber electrode (16); a first electrode (12) which is disposed downstream in a flow path for the water (22) to be treated and is connected to the fiber electrode (16), and which is applied with a negative potential; a second electrode (14) which is disposed apart from the fiber electrode (16) and upstream of the first electrode (12) in the flow path, and which is applied with a positive potential; and supplying means which applies the negative and positive potentials to the first electrode and the second electrode, respectively. Such a configuration allows the oxidant represented by hypochlorous acid to be removed from the water to be treated.
In another embodiment, the water to be treated contains a substance that can become a part of an oxidant and is brought into contact with the second electrode, thereby it generates the oxidant. The water is sterilized with the oxidant between the first electrode and the second electrode and at least a fraction of the oxidant is decomposed with the fiber electrode electrically connected to the first electrode.

## Description

This application claims priority from Japanese Patent Application Number JP 2007-186074 filed on July 17, 2007, the content of which is incorporated herein by reference in its entirety.

### BACKGROUND OF THE INVENTION

### Field of the Invention

The present invention relates to a water treatment device and a water treatment method for sterilizing water (water to be treated: hereinafter, also referred to as to-be-treated water) used for tap water, river water, cooking and drinking water, or a pool, public bath, hot spring and the like.

### Description of the Related Art

Recently, a water treatment technology has been rapidly developed to remove microorganisms such as bacteria, mold and parasites from water (to-be-treated water) used for tap water, river water, cooking and drinking water, public bath, hot spring, and the like. The most typical method for removing (sterilizing) bacteria and the like from the to-be-treated water is to add an oxidant such as hypochlorous acid to the to-be-treated water. With this method, it is possible to kill the bacteria and the like in the to-be-treated water relatively easily at low cost. Moreover, under the Japanese Water Supply Law, the concentration of free residual chlorine in tap water at the end of a water pipe (faucet) of water supply sterilized with chlorine, is regulated to be 0.1 mg/L or above.

However, when chlorine such as hypochlorous acid is used for sterilizing the to-be-treated water, the chlorine (particularly, hypochlorous acid) inevitably remains in the water, thus worsening the taste of the sterilized water. In particular, in an area where the water quality of a water source such as a river, lake or marsh is low, a large amount of hypochlorous acid is added to the water in order to kill a huge number of germs therein. Since the large amount of hypochlorous acid is used, the concentration of free residual chlorine is accordingly high, thus causing a problem that a poor taste of the tap water is supplied from that water supply.

In order to solve this problem, alternative methods of sterilizing to-be-treated water without using chlorine have been developed. Examples of such a method include:
filtration with a filter having extremely fine filtration pores; a method of adding ozone or a hydrogen peroxide solution to to-be-treated water; a method of bringing activated carbon into contact with to-be-treated water; and the like. Nevertheless, these methods cause other problems that the cost is increased, that germs in treated water propagates again before the water reaches the ends of water pipes of water supply, and so on.

The present applicants have conducted research and development to solve these problems. For example, the applicants have previously developed a device in which a pair of electrodes and a conductive material capable of trapping microorganisms are provided in a flow path for to-be-treated water. In the device, the microorganisms are absorbed to the conductive material by applying a positive charge to the conductive material while applying a negative charge to one of the electrodes. This technology is described, for instance, in Japanese Patent Application Publication No. 2005-254118 (Patent Document 1). According to this technology, the microorganisms in the to-be-treated water can be treated without use of an agent such as chlorine and ozone. Thereby, it is possible to reduce odor peculiar to chlorine and ozone, further to omit a troublesome operation of putting the agent, and also to avoid risk in handling the agent.

Furthermore, another technology to solve the same problems as above has been disclosed. This technology is described, for instance, in Japanese Patent Application Publication No. 1993(Hei 5)-200387 (Patent Document 2). In this document, a chlorine component in treated water is decomposed or reduced on an electrode of a multi-electrode type electrolytic bath, and thereby the water is reformed. According to the technology described in this document, it is possible to obtain drinking water which contains little chlorine component.

With the water treatment device described in Patent Document 1, microorganisms and the like can be removed or sterilized to some extent. However, it is hard to decompose an oxidant (for example, hypochlorous acid) in the to-be-treated water. This is because, in the device, a carbon fiber electrode capable of decomposition is connected to the electrode on the positive side. Accordingly, when the to-be-treated water containing a large amount of hypochlorous acid is treated with this water treatment device, the hypochlorous acid remains, which worsens the taste of the to-be-treated water.

Furthermore, in the treatment device described in Patent Document 2, the electrodes of multi-electrode type are used, and accordingly multiple layers made of a carbon fiber are provided in a flow path for the to-be-treated water. This may brings about a problem that, once attached to the carbon fiber, air contained in the to-be-treated water tends not to remove from the carbon fiber. If the air does not remove from the carbon fiber, the air in the carbon fiber inhibits the to-be-treated water from contacting the carbon fiber, consequently reducing the effect of the decomposition function of the carbon fiber.

### SUMMARY OF THE INVENTION

The present invention has been made to solve the above-described problems. An object of the present invention is to provide a water treatment device and a water treatment method which are capable of efficiently decomposing an oxidant such as hypochlorous acid in water to be treated.

The solution according to the invention resides in the features of the independent claims and preferably in those of the dependent claims.

A water treatment device of the present invention includes a fiber electrode which is disposed in a flow path for water to be treated, and which decomposes an oxidant contained in the water to be treated while being electrically connected to an electrode applied with a negative potential.

Furthermore, another water treatment device of the present invention is disposed in a flow path for water to be treated, the water containing a substance that can become a part of an oxidant. The water treatment device includes: a fiber electrode; a first electrode which is disposed downstream in the flow path for the water to be treated and connected to the fiber electrode, and which is applied with a negative potential; a second electrode which is disposed apart from the fiber electrode and upstream of the first electrode in the flow path, and which is applied with a positive potential; and supplying means which applies the potentials to the first electrode and the second electrode. The substance contained in the water to be treated is brought into contact with the second electrode thereby to generate the oxidant, and at least a fraction of the generated oxidant is decomposed by the fiber electrode.

In a water treatment method of the present invention, a negative potential is applied to a fiber electrode disposed in a flow path for water to be treated thereby to decompose an oxidant contained in the water to be treated.

Furthermore, in another water treatment method of the present invention, water to be treated, the water containing a substance that can be a part of an oxidant, the water treatment method including the steps of:
disposing a second electrode and a first electrode in a flow path for the water to be treated from an upstream side in this order, the first electrode being electrically connected to a fiber electrode and applied with a negative potential, and the second electrode being applied with a positive potential; generating the oxidant by bringing the substance contained in the water to be treated into contact with the second electrode; sterilizing the water to be treated with the oxidant between the first electrode and the second electrode; and decomposing at least a fraction of the oxidant with the fiber electrode electrically connected to the first electrode.

### BRIEF DESCRIPTION OF THE DRAWINGS

Fig. 1 is a perspective view showing a water treatment device according to a preferred embodiment of the present invention.
Fig. 2 is a cross-sectional view showing the water treatment device according to the preferred embodiment of the present invention.
Fig. 3 is a cross-sectional view showing another water treatment device according to the preferred embodiment of the present invention.
Fig. 4 is a cross-sectional view showing another water treatment device according to the preferred embodiment of the present invention.
Fig. 5A and Fig. 5B are cross-sectional views showing another water treatment device according to the preferred embodiment of the present invention.
Fig. 6A is a plan view, and Fig. 6B is a cross-sectional view, showing another water treatment device according the preferred embodiment of the present invention.
Fig. 7 is a graph showing an experimental result obtained using the water treatment device according to the preferred embodiment of the present invention.
Fig. 8 is a graph showing an experimental result obtained using the water treatment device according to the preferred embodiment of the present invention.
Fig. 9 is a graph showing an experimental result obtained using the water treatment device according to the preferred embodiment of the present invention.
Fig. 10 is a table showing an experimental result obtained using the water treatment device according to the preferred embodiment of the present invention.

### DESCRIPTION OF THE INVENTIONS

### [First embodiment: structure of water treatment device]

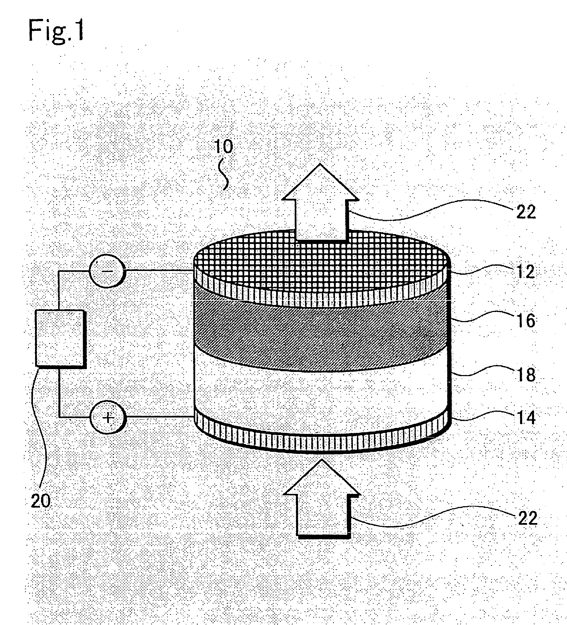

Description will be given of a schematic configuration of a water treatment device according to this embodiment with reference to Fig. 1. Fig. 1 is a perspective view showing a water treatment device 10 according to this embodiment. As shown in this drawing, the water treatment device 10 mainly includes: a first electrode 12; a fiber electrode 16 electrically connected to the first electrode 12; a spacer 18; a second electrode 14; and a direct-current (DC) power supply 20 (supplying means) which applies a negative (minus) potential to the first electrode 12, and which applies a positive (plus) potential to the second electrode 14. To-be-treated water 22 is the water to be treated with the water treatment device 10, and the flow path thereof is formed from bottom to top on the page. The to-be-treated water 22 passes through the second electrode 14, the spacer 18, the fiber electrode 16 and the first electrode 12 in this sequence to be treated. With the water treatment device 10 of this embodiment, the to-be-treated water 22 is reformed by the decomposition and reduction of an oxidant such as hypochlorous acid contained in the to-be-treated water 22. To be more specific, the oxidant represented by hypochlorous acid is generated at the second electrode 14, and sterilization treatment with the generated oxidant is conducted at the following stage of the second electrode 14. Thereafter, the oxidant used for the sterilization is decomposed by the fiber electrode 16.

Hereinafter, the configuration of the water treatment device 10 in this embodiment will be firstly described in detail, and then configurations of the water treatment device in other embodiments will be described.

The to-be-treated water 22 shown in Fig. 1 contains an oxidant or a substance that can be a part of the oxidant. Tap water is an example of the to-be-treated water 22. The tap water is supplied after filtration treatment (solid-liquid separation treatment) on groundwater, river water, lake water, or the like, and after predetermined treatment thereon, for example, addition of an oxidant such as hypochlorous acid. In this respect, the oxidant includes hypohalous acid represented by hypochlorous acid (HClO), ozone (O₃), a hydrogen peroxide solution (H₂O₂), a hypochlorite ion, and chlorine. Furthermore, the substance that can be a part of the oxidant includes a chloride ion (Cl⁻) that can constitute hypochlorous acid, and water (H₂O) that can constitute ozone (O₃) and a hydrogen peroxide solution (H₂O₂).

The first electrode 12 is an insoluble electrode formed by processing a conductive material into the material having a mesh (net) shape, the conductive material including an element such as platinum (Pt), iridium (Ir), tantalum (Ta), palladium (Pd), titanium (Ti), or stainless steel, or a combination of these. Specifically, the first electrode 12 to be used is formed by processing a platinum-iridium coated titanium electrode so as to have a mesh shape and to have a disk-like shape on the whole, the platinum-iridium coated titanium electrode being formed by coating a titanium electrode with an alloy consisting of platinum and iridium. The first electrode 12 can also be formed of only platinum and iridium. However, the mechanical strength of the first electrode 12 can be improved and the cost thereof can be reduced, if the base material is titanium.

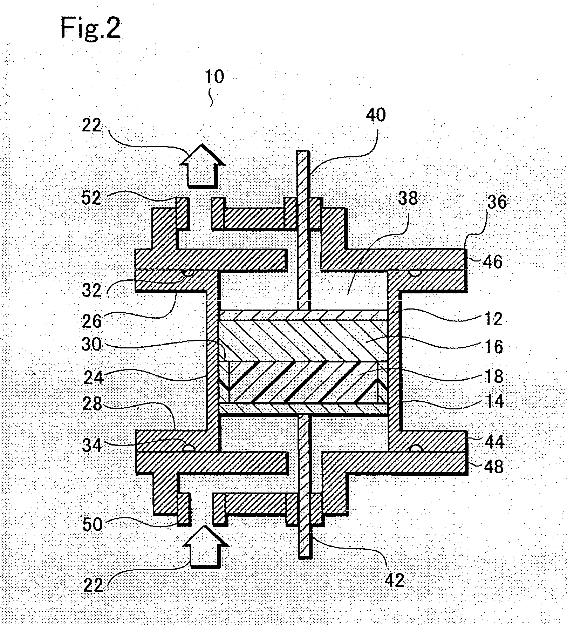

To put it another way, by being processed into the electrode having a mesh shape, the first electrode 12 has water permeability such that the to-be-treated water 22 can flow therethrough. Moreover, the mesh-shaped first electrode 12 is formed into a disk shape such that the outer diameter thereof can be approximately the same as the inner diameter of a main body 44 (see Fig. 2). The first electrode 12 is connected to the direct-current (DC) power supply 20, as the supplying means, and a negative potential is applied to the first electrode 12 therefrom. Incidentally, the role of the first electrode 12 is to connect the fiber electrode 16 to the power supply. Accordingly, the material of the first electrode 12 may be an anticorrosion metal (for example, stainless steel as described above).

The material and the quality of material of the second electrode 14 may be the same as the first electrode 12 described above. Furthermore, the second electrode 14 is disposed upstream of the first electrode 12 and the fiber electrode 16 in the flow path for the to-be-treated water 22. When an oxidant is generated at the second electrode 14 to sterilize the to-be-treated water 22, at least the surface of the second electrode 14 needs to be coated with a metal that allow the oxidant to be generated. Herein, such a metal is ruthenium (Ru), rhodium (Rh), palladium (Pd), tantalum (Ta), silver (Ag), osmium (Os), iridium (Ir), platinum (Pt) or gold (Au). Alternatively, a material that contains at least one substance among these is used as the metal. Specifically, the second electrode 14 is formed of: a titanium base material; and a thin film attached to the surface of the base material by sintering, plating or CVD process. Herein, the thin film is made of the metal the allows the oxidant to be generated or an alloy including the metal. The second electrode 14 is set apart from the fiber electrode 16 with the spacer 18 interposed therebetween, and is applied with a positive potential from the power supply 20.

The fiber electrode 16 is disposed in such a way as to closely attach to a main surface on the upstream side (the bottom surface on the page) of the first electrode 12. The fiber electrode 16 is formed of a fiber made of a conductive material. The material to be used therefor is fiber metal or carbon fiber. Particularly, the carbon fiber is preferable as the material of the fiber electrode 16, since it is low cost and does not generate deterioration such as corrosion. When the carbon fiber is used, the to-be-treated water 22 can be desirably treated by using the carbon fiber in a felt form, which is sintered at a temperature at or above 2000°C (preferably, 2500°C). In this embodiment, the fiber electrode 16 functions to decompose an oxidant such as hypochlorous acid in the to-be-treated water 22. Furthermore, the fiber electrode 16 functions to trap an object to be removed such as a microorganism in the to-be-treated water 22. The thickness of the fiber electrode 16 is, for example, approximately 1.0 mm to 10.0 mm. According to an experiment to be described later, the minimum required thickness of the fiber electrode 16 is 1.0 mm. Herein, the fiber electrode 16 may be considered as a part of the first electrode 12.

The fiber electrode 16 is bonded to the first electrode 12 through a conductive binder. Herein, the binder to be employed is, for example, a conductive binder obtained by mixing a high molecular adhesive such as methylcellulose with a conductive powder (for example, carbon powder). In this manner, by binding the fiber electrode 16 to the first electrode 12 with the binder, the area where the conductive fiber in the fiber electrode 16 comes into contact with the first electrode 12 is increased, and consequently the continuity between the two becomes preferable, thereby improving the treatment efficiency. Moreover, the continuity between the fiber electrode 16 and the first electrode 12 is preferably increased by pushing the fiber electrode 16 with repulsive force from the spacer 18 that is described below.

It is desirable to use, as the spacer 18, a nonconductive porous material capable of extending, and having a high porosity. Here, the porosity is a percentage of a gap portion (air portion) in the porous structure. Thus, as the porosity increases, the density (bulk density) of the spacer 18 decreases (texture becomes coarser). Meanwhile, as the porosity decreases, the density of the spacer 18 increases (texture becomes finer). In this embodiment, a material used as the spacer 18 is a high molecular nonwoven fabric having water permeability, for example, a polyester fiber or a polyvinylidene chloride type high molecule fiber such as saran (available from Asahi Kasei Corporation) fiber, and is the material having porosity of greater than 95%.

Furthermore, the spacer 18 abuts on the main surface of the fiber electrode 16, and pushes the fiber electrode 16. Accordingly, the fiber electrode 16 is compressed by the pushing force of the spacer 18, and pushed toward the first electrode 12. Thereby, the fiber electrode 16 is closely attached to the bottom surface of the first electrode 12. In this way, by closely attaching the fiber electrode 16 to the first electrode 12, this fiber electrode 16 is electrically connected to the first electrode 12 to thereby form a part of the first electrode 12. In other words, when electricity is conducted through the first electrode 12, the electricity is also conducted through the fiber electrode 16. As a result, this fiber electrode 16 is charged to the same potential as that of the first electrode 12.
Still furthermore, by providing the spacer 18, the surface on the second electrode 14 side (that is, the bottom surface in this embodiment) of the fiber electrode 16 can be flattened. Specifically, as described above, the fiber electrode 16 is closely attached to the first electrode 12, and thus the entire fiber electrode 16 constitutes a part of the first electrode 12. However, if the bottom surface of the fiber electrode 16 is not flat, the distance to the facing surface of the second electrode 14 becomes nonuniform. For this reason, a current does not flow through the fiber electrode 16 uniformly. As a result, there arises an inconvenience that a large amount of current flows locally through a portion where the distance between the bottom surface of the fiber electrode 16 and the top surface of the second electrode 14 is the closest (that is, a portion where the distance is the shortest).

Consequently, it brings about a problem that the fiber electrode 16 is likely to deteriorate because, for example, the portion where a large amount of current has flowed locally is burned, whereby the lifetime thereof is shortened. For this reason, in this embodiment, by disposing the spacer 18 on the bottom surface of the fiber electrode 16, the surface on the second electrode 14 side (that is, the bottom surface in this embodiment) is flattened. Accordingly, the distance between the fiber electrode 16 and the second electrode 14 can be approximately uniform. Thus, it is possible to solve the problem that a large amount of current flows locally through the fiber electrode 16, and the lifetime of the fiber electrode 16 can be extended.

The power supply 20 is a dry cell, a battery or a converter that converts a commercial alternating-current (AC) voltage into a direct-current (DC) voltage of a predetermined level. The power supply 20 applies a voltage to the water treatment device 10. In this embodiment, the power supply 20 applies a negative potential to the first electrode 12 (that is, the fiber electrode 16), and applies a positive potential to the second electrode 14. Here, the power supply 20 may be controlled by a controller (unillustrated). Specifically, the controller controls the voltage to be applied to the two electrodes so that the current that passes between the first electrode 12 and the second electrode 14 can be constant (constant current).

Next, description will be given of an embodied configuration of the water treatment device 10 with reference to Fig. 2. In the description below, the parts having the same functions as those illustrated in Fig. 1 are indicated by the same reference symbols or names in some cases, and thus the descriptions thereof will be omitted.

The water treatment device 10 shown in this drawing mainly includes: the main body 44 formed into a substantially cylindrical shape, and having openings at the upper and lower edges; a lid member 46 which seals the opening on the upper side of the main body 44 from the top; a lid member 48 which seals the opening on the lower side of the main body 44 from the bottom; and the electrodes which are accommodated in the main body 44, and which removes the oxidant contained in the to-be-treated water 22. A schematic method in which the water treatment device 10 treats the to-be-treated water 22 is as follows. Specifically, the to-be-treated water 22 flows into the device from a flow inlet 50, positioned at a lower portion of the device, of the lid member 48. Then, the oxidant in the to-be-treated water 22 is decomposed with the fiber electrode 16 that is accommodated in the main body 44. Thereafter, the water thus treated (to-be-treated water 22) is discharged outside the system from a flow outlet 52, positioned at an upper portion of the device, of the lid member 46.

The water treatment device 10 is disposed in the flow path through which the to-be-treated water 22 flows. Herein, the flow path is a closed water path such as a pipe, or an open water path where a part of the water path is exposed to the outside air.

Hereinafter, specific description will be given of each constituent of the water treatment device 10 having the above-described schematic configuration.

At first, a case 36 is made of an insulating material such as a glass and a resin material. The case 36 is configured of the main body 44 and the lid members 46 and 48 that block the respective upper and lower openings of the main body 44. The main body 44 is configured of a wall surface 24 of a vertically long cylindrical shape, an edge portion 26 on the upper side, and an edge portion 28 on the lower side. The edge portions 26 and 28 are disposed on the respective upper and lower edges of the wall surface 24, each extend in a circumferential direction (lateral direction in the drawing), and each of the edge portions has a predetermined thickness. A treatment chamber 38 is formed inside the wall surface 24 of the main body 44, and the treatment chamber 38 accommodates the above-described members (the first electrode 12, the fiber electrode 16, the spacer 18, the second electrode 14 and a locking ring 30). The inner diameter of the illustrated main body 44 (inner diameter of wall surface 24) is approximately 40 mm, for example. The height of the water treatment device 10 is approximately 50 mm, for example.

A through hole is formed in the lid member 46, and penetrates the lid member 46 in the axial direction (vertical direction in the drawing). The through hole serves as the flow outlet 52 for discharging the treated water (to-be-treated water 22) which has passed through the treatment chamber 38, from the water treatment device 10. Moreover, as in the lid member 46, a through hole is formed in the lid member 48, and penetrates the lid member 48 in the axial direction (vertical direction in the drawing). This through hole serves as the flow inlet 50 for guiding the to-be-treated water 22 having been supplied from the outside (through, for example, a pipe path from a purification plant and containing residual chlorine) to the inside of the water treatment device 10.

The lid member 46 is attached to the edge portion 26 of the main body 44 through an O-shaped ring 32. Similarly, the lid member 48 is attached to the edge portion 28 through an O-shaped ring 34. In this manner, the case 36 is formed. More specifically, a groove having a predetermined depth is formed in the top surface of the edge portion 26. The groove is circular in shape, when viewed from the top. Then, the O-shaped ring 32 made of an elastic body such as rubber is disposed in the groove. While the O-shaped ring 32 is mounted therein, the lid member 46 is compressed onto the top surface of the edge portion 26 of the main body 44 from the top. Accordingly, the O-shaped ring 32 that is applied with the compression force in a thickness direction, hermetically seals a gap between the bottom surface of the lid member 46 and the top surface of the edge portion 26. Thereby, the O-shaped ring 32 prevents the to-be-treated water 22 from leaking outside from the inside of the treatment chamber 38 through the gap between the two. In other words, the O-shaped ring 32 improves the sealing performance between the lid member 46 and the main body, and the water tightness of the case 36.

This feature is in common with the lid member 48 that blocks the treatment chamber 38 of the main body 44 from the bottom. A groove of a circular shape is formed in the bottom surface of the lid member 28, and the O-shaped ring 34 is placed in this groove. With this O-shaped ring, the sealing performance between the edge portion 28 of the main body 44 and the lid member 48 is improved.

The second electrode 14, the spacer 18, the fiber electrode 16 and the first electrode 12 are disposed in this sequence from the upstream side of the flow path for the to-be-treated water 22 (from bottom to top on the page) inside the treatment chamber 38. The details of the electrodes and the spacer 18 are the same as those described with reference to Fig. 1.

Moreover, the spacer 18 is disposed under the fiber electrode 16, while the locking ring 30 is being attached to the outer periphery of the spacer 18. The locking ring 30 is formed so that the inner diameter thereof can be approximately the same as the outer diameter of the spacer 18, whereby the inner peripheral surface of the locking ring 30 is capable of holding the outer peripheral surface of the spacer 18. Moreover, the locking ring 30 is formed so that the outer diameter thereof can be approximately the same as the inner diameter of the wall surface 24 of the main body 44, whereby no gap is formed between the wall surface 24 and the locking ring 30 when the locking ring 30 is attached to the main body 44. Further, the spacer 18 is closely attached to the bottom surface of the fiber electrode 16 so that the central portion (the center in the axial direction) of the spacer 18 can match the central portion (the center in the axial direction) of the fiber electrode 16. Furthermore, by attaching the locking ring 30 to the outer periphery of the spacer 18, it is possible to solve a problem that the spacer 18 moves in a circumferential direction (lateral direction on the page).

Power-supplying rods 40 and 42 constitute a part of an electrically conducting path used for applying a voltage to each of the electrodes built in the water treatment device 10. The power-supplying rod 40 is inserted into the inside of the device 10 through an opening provided in a part of the lid member 46 that blocks the main body 44 from the top. The gap between the opening and the power-supplying rod 40 is sealed with a gasket made of a resin material. The lower end of the power-supplying rod 40 is electrically connected to the first electrode 12. The other end of the power-supplying rod 40, which is exposed to the outside of the case 36 (upper end on the page) is applied with a negative potential from the power supply. Meanwhile, the power-supplying rod 42 is inserted into the inside of the device 10 through an opening provided in a part of the lid member 48 that blocks the main body 44 from the bottom.
The gap between this opening and the power-supplying rod 42 is sealed as similar to the above. The upper end of the power-supplying rod 42 is electrically connected to the second electrode 14. The lower end of the power-supplying rod 42 is exposed to the outside from the case 36, and applied with a positive potential from the power supply.

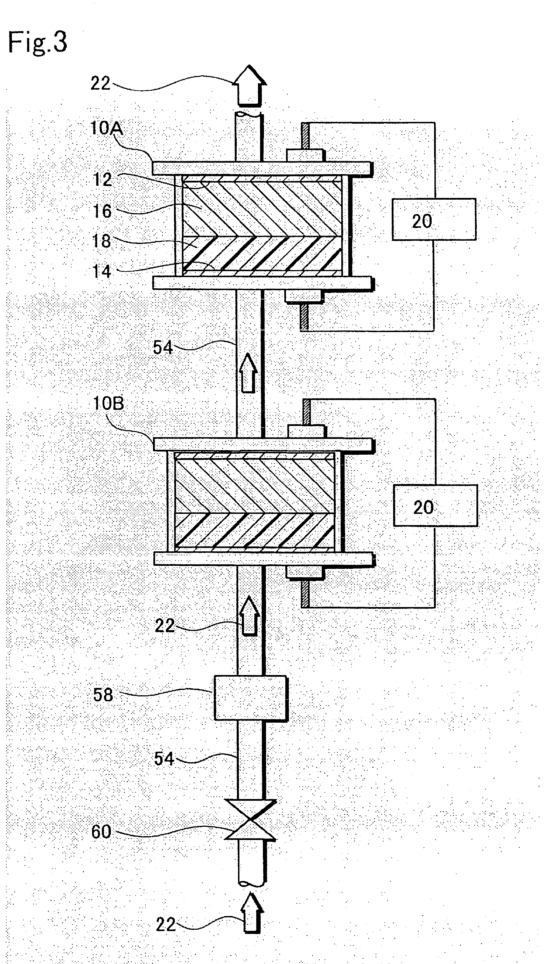

Next, description will be given of other embodiments of the water treatment device with reference to Figs.3 to 6. In each of Figs. 3 to 6, the other embodiment of the water treatment device is illustrated. Hereinafter, the descriptions for the same portions as those described above will be omitted.

In Fig. 3, two water treatment devices are disposed in series to a flow path 54. Specifically, the water treatment devices 10B and 10A are disposed on the flow path 54 in this sequence from the upstream side (from bottom to top on the page). In the flow path 54, the to-be-treated water 22 flows from bottom to top on the page. The configurations of the water treatment devices 10A and 10B are the same as that described with reference to Fig. 1. For example, a second electrode 14, a spacer 18, a fiber electrode 16 and a first electrode 12 are disposed, inside the water treatment device 10A, in this sequence from the upstream side of the flow path 54. The first electrode 12 is applied with a negative potential from a power supply 20. The second electrode 14 is applied with a positive potential from the power supply 20. The configuration of the water treatment device 10B is the same as the device 10A. The specific configurations of the water treatment devices 10A, 10B may be the one illustrated in Fig. 2.

Moreover, a flowmeter 58 and a valve 60 (regulating means) are disposed upstream of the water treatment devices 10A, 10B (bottom side on the page). The flowmeter 58 measures the flow rate of the to-be-treated water 22 that flows through the flow path 54. The valve 60 has a function to regulate the amount of the to-be-treated water 22 that flows inside the flow path 54. The valve 60 may be adjusted so that, for example, the flow rate measured with the flowmeter 58 can be a predetermined value.

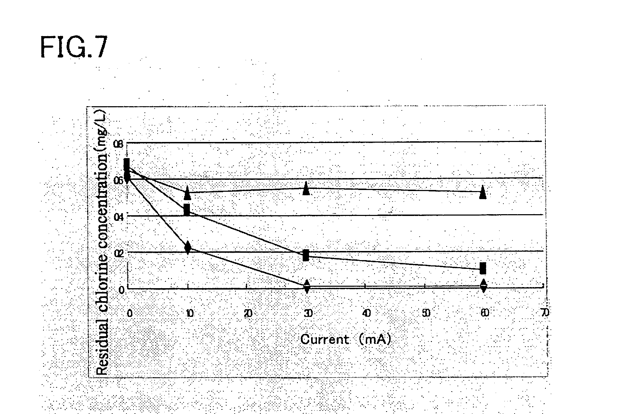

Now, the role of the valve 60 is described. In this embodiment, by adjusting the flow rate of the to-be-treated water that flows through the flow path 54 with the valve, it is possible to adjust the concentration of the oxidant in the to-be-treated water 22 after the treatment. For example, firstly, the flow rate (treatable flow rate) of the to-be-treated water 22 that the fiber electrode 16 can decompose (reduce) all of the oxidant in the to-be-treated water 22 is specified in an experiment. Secondly, the valve 60 is adjusted so that the flow rate of the to-be-treated water 22 can be lower than this treatable flow rate. Thereby, it is possible to obtain treated water (to-be-treated water 22) that does not contain the oxidant at all (or, contains little oxidant). Meanwhile, when the valve 60 is adjusted so that the flow rate of the to-be-treated water can be greater than the above treatable flow rate, the oxidant such as hypochlorous acid is partially removed. Thereby, it is possible to obtain treated water (to-be-treated water 22) in which the residual oxidant remains. In this case, it is possible to obtain treated water (to-be-treated water 22) that contains at least minimum amount of free residual chlorine defined by the water quality standard. An experiment conducted to verify this point will be described later with reference to a graph shown in Fig. 7.

With this configuration of the water treatment device in this embodiment, multiple water treatments can be conducted with the water treatment devices 10A and 10B, thereby increasing the effect of removing the oxidant by the fiber electrode 16. Furthermore, when the oxidant is generated at the second electrode 14, the oxidant is generated in a large amount, thereby increasing the effect of sterilizing the to-be-treated water 22 with the water treatment device 10A and the like.

Here, the number of the water treatment device 10A disposed in series may be three or more. Furthermore, the multiple water treatment devices may be disposed in parallel with respect to the flow path 54. Still furthermore, a set of the multiple water treatment devices connected in series may be disposed in parallel with respect to the flow path 54.

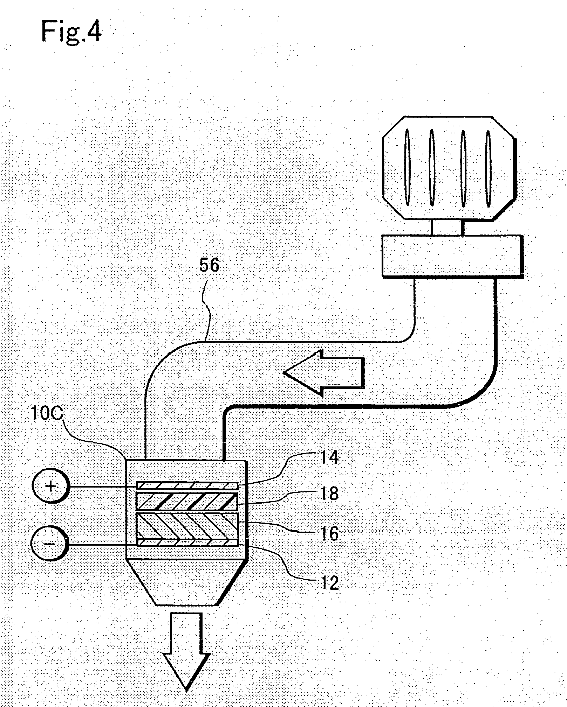

Next, description will be given of a case where another embodiment of a water treatment device 10C is applied to a faucet 56 for water with reference to Fig. 4. In this embodiment, the water treatment device 10C is set at the tip end of the faucet 56. The specific configuration of the water treatment device 10C is basically the same as the above-described water treatment device. To be more specific, the water treatment device 10C includes a second electrode 14, a spacer 18, a fiber electrode 16, and a first electrode 12, in this sequence from the upstream side of the faucet 56. The second electrode 14 is applied with a positive potential from the power supply, while the first electrode 12 is applied with a negative potential therefrom. Incidentally, the water treatment device 10C may be a cartridge type with which the device 10C is easily detached from the faucet 56.

By setting the water treatment device 10C having such a configuration at the faucet 56, tap water with reduced chlorine smell and the like can be obtained. Specifically, although normal tap water has free residual chlorine (oxidant) such as hypochlorous acid remained as described above, all (or part) of this oxidant can be removed by the water treatment device 10C. Since the oxidant such as hypochlorous acid which causes the chlorine smell is removed from the tap water, users can obtain the tap water that has a taste closer to a natural taste.

Moreover, when hypochlorous acid is generated at the second electrode 14, the tap water can be sterilized with the water treatment device 10C. Specifically, even when the tap water supplied to the faucet 56 does not contain (or contains a little amount of) residual chlorine, the chloride ion contained in the tap water combines with water on the surface of the second electrode 14 to generate hypochlorous acid. Then, sterilization with the generated hypochlorous acid is conducted between the second electrode 14 and the fiber electrode 16. Thereafter, the hypochlorous acid contributed to the sterilization is decomposed by the fiber electrode 16, thereby suppressing the increase in the amount of hypochlorous acid, which is generated at the second electrode 14, remained at the end of the faucet 56. Thus, the worsening of the chlorine smell due to the hypochlorous acid generated at the second electrode 14 does not occur.

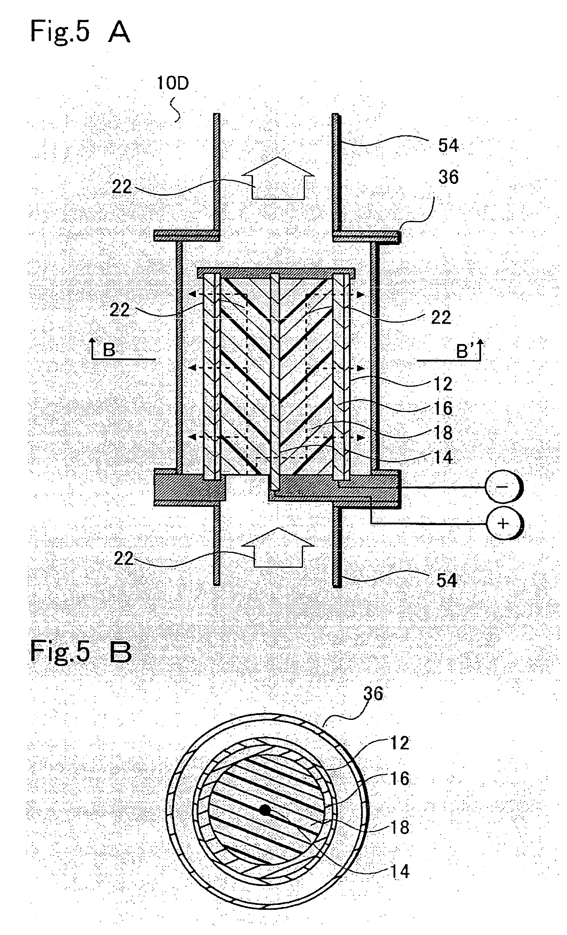

With reference to Fig. 5A and Fig. 5B, description will be given of a configuration of another embodiment of a water treatment device 10D. Fig. 5A is a cross-sectional view obtained by cutting the water treatment device 10D along the flow of the flow path 54. Fig. 5B is a cross-sectional view taken along the line B-B' in Fig. 5A. The water treatment device 10D shown in the drawings has rod-shaped or cylindrical electrodes unlike the above-described other water treatment devices 10 and the like, but is the same as the water treatment devices 10 and the like in other aspects.

As shown in Fig. 5A, in the water treatment device 10D, a rod-shaped second electrode 14 is disposed in the central portion of the case 36. This rod-shaped second electrode 14 is surrounded by a spacer 18, a fiber electrode 16 and a first electrode 12, all of which have cylindrical shapes, and which are disposed in this sequence from the inner side. A negative potential is applied to the second electrode 14 from the outside, and a positive potential is applied to the first electrode 12 from the outside. In the drawing, a dashed line indicates a passage where the to-be-treated water 22 flows in the case 36.

Fig. 5B shows that the second electrode 14 is formed into the rod shape, and that the spacer 18, the fiber electrode 16 and the first electrode 12 are formed into the cylindrical shapes.

Referring back to Fig. 5A again, the to-be-treated water 22 supplied from the flow path 54 at the lower portion of the water treatment device 10D enters the inside of the case 36, and reaches a treatment chamber in the case 36 through the second electrode 14, the spacer 18, the fiber electrode 16 and the first electrode 12. By making the to-be-treated water 22 flow through these constituents, the oxidant in the to-be-treated water 22 is removed. The treated water (to-be-treated water 22) is discharged outside the system from the case 36. In the water treatment device 10D, the fiber electrode 16 is formed into the cylindrical shape, thus allowing the fiber electrode 16, having a relatively large area, to be accommodated in the small-sized case 36. Thereby, such a large area of the fiber electrode 16 increases the performance of decomposing the oxidant, thus promoting the reduction in size and the functional improvement of the water treatment device 10D.

Moreover, with the above configuration of the water treatment device 10D, it is possible to attach the water treatment device 10D to the flow path 54 (aqueduct) as a part thereof. The water treatment device 10D has the cylindrical fiber electrode 16 in comparison with the structure described in the above Patent Document 1. Thereby, the area through which the to-be-treated water 22 passes is increased, and thus the treating efficiency of the entire device is improved.

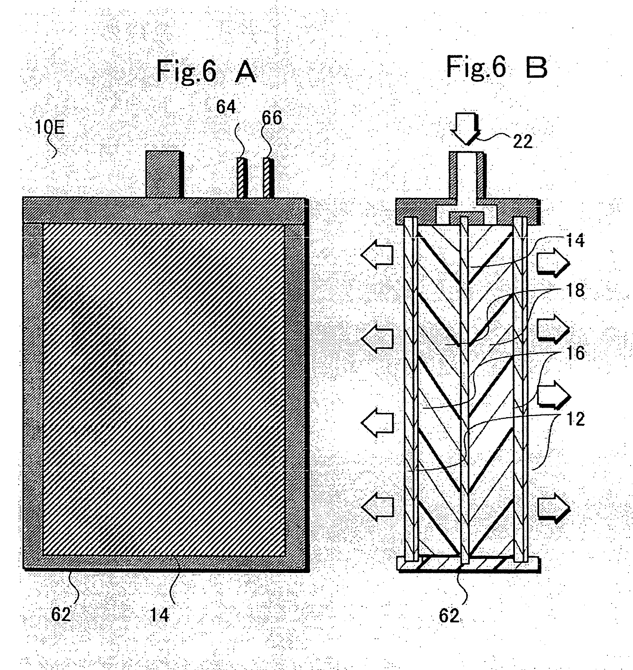

Next, description will be given of a configuration of another embodiment of a flat-film type water treatment device 10E with reference to Fig. 6A and Fig. 6B. Fig. 6A is a plan view of the flat-film type water treatment device 10E, viewed from a filtration surface thereof, and Fig. 6B is a typical cross-sectional view thereof. The basic configuration of the water treatment device 10E shown in these drawings is the same as that of the above-described other water treatment device 10 and the like, and only configurations of the electrodes are different.

As shown in Fig. 6A, the water treatment device 10E is configured to have a frame 62, having a frame shape made of a resin material or an anticorrosion metal (for example, stainless steel), which builds in a second electrode 14. Inside the frame 62, the electrodes that constitute the water treatment device 10E are disposed. The electrodes built in the device are electrically connected to connectors 64, 66 that are exposed to the outside. For example, the connector 64 is connected to the built-in first electrode 12, and the connector 66 is connected to the second electrode 14. Moreover, an opening portion (inlet portion) is provided on top of the frame 62. The opening portion is formed of a pipe or the like that communicates with the internal space of the frame 62.

As shown in Fig. 6B, the electrodes that constitute the water treatment device 10E are disposed so as to have film shapes (sheet or plate shapes) inside the frame 62. Specifically, a single sheet of a second electrode 14 is disposed at the innermost portion of the frame 62. In this respect, a space may be formed inside the frame 62 by the second electrode 14 that has, for example, a pouched shape, and the to-be-treated water 22 may be injected into the space.

A spacer 18, a fiber electrode 16 and a first electrode 12 are formed in this sequence from the inner side so as to sandwich the second electrode 14 from both sides. The spacer 18, the fiber electrode 16 and the first electrode 12 may each have a pouched shape, or each two films of these constituents may be disposed so as to sandwich the second electrode 14 from both sides.

The water treatment device 10E having the above-described configuration is used, for example, by injecting the to-be-treated water 22 into the device 10E through the opening portion provided on top of the frame. Specifically, the to-be-treated water 22 is injected into the frame 62 with pressurizing means such as a pump provided outside, and discharged outside the system by way of the second electrode 14, the spacer 18, the fiber electrode 16 and the first electrode 12. At this point, the water treatment device 10E may be used, while being accommodated inside storing means such as a tank. The function to remove an oxidant by the water treatment device 10E is the same as above.

Here, the positions of the electrodes and the spacer accommodated in the frame 62 may be switched to each other (that is, the positional relation between the outside constituent and the inside constituent may be altered). In this case, the to-be-treated water 22 enters the inside from the film-like electrode, and is discharged after being absorbed to the outside from the opening portion provided on top of the frame.

The water treatment device 10E with the above configuration can be used, while being immersed in a reservoir tank for the to-be-treated water 22. The water treatment device 10E has a large water-permeable area (that is, the area of the fiber electrode 16) in comparison with the water treatment device described in Patent Document 1. Thus, the efficiency of treating the to-be-treated water 22 is improved.

Here, description will be given of a difference between this embodiment and the technique (conventional technique) of Patent Document 2 described in "Description of the Related Art." The main difference between this embodiment and the conventional technique is that the multi-electrode type electrodes are used in the conventional technique while the single-electrode type electrodes are used in this embodiment. The multi-electrode type means a method in which an electrode that is not connected to a power supply (that is, in an electrically floating state) is interposed between a pair of electrodes that are connected to the power supply, thereby causing polarization. The multi-electrode type electrodes in the conventional technique, however, require multiple layers of fiber electrodes. As a result, air in water to be treated remains in the fiber electrodes, thus reducing the treatment efficiency.

On the other hand, according to this embodiment, the water treatment (that is, decomposition and reduction of the oxidant) is conducted with the single-electrode type electrodes. Specifically, as shown in Fig. 1, the water treatment device 10 is of the single-electrode type that includes the mesh-shaped first electrode 12, the fiber electrode 16 and the second electrode 14 that are electrically connected to the first electrode 12. Thereby, in contrast to the conventional multi-electrode type treatment device, the water treatment is conducted with the single layer of fiber electrode, and even when air is mixed in the to-be-treated water 22, the air does not remain in the fiber electrode 16, and is easily escaped therefrom. Thus, the decrease in the treatment efficiency, due to the air mixed in the to-be-treated water 22, is suppressed.

Furthermore, the water treatment device of this embodiment is provided with the multiple water treatment devices in series with respect to the flow path as described with reference to Fig. 3. Thereby, in a case, for example, where a large amount of oxidant such as hypochlorous acid remains in the to-be-treated water 22, or where the flow amount of the to-be-treated water 22 is large, the oxidant in the to-be-treated water 22 can be decomposed sufficiently by setting the multiple water treatment devices in series with respect to the flow path. In this respect, it is not necessary to remove all of the oxidant remaining in the to-be-treated water 22 before the treatment with the water treatment devices, and the water after the treatment (to-be-treated water 22) may contain some of the oxidant.

### [Second embodiment: water treatment method]

Next, description will be given of a water treatment method with a water treatment device 10 having the above-described structure. The water treatment method with the water treatment device of this embodiment is roughly classified into two patterns. A first water treatment method is to remove an oxidant such as hypochlorous acid in water to be treated. A second water treatment method is to generate an oxidant at a second electrode 14 on a positive electrode side, and to decompose the generated oxidant with a fiber electrode 16. Hereinafter, these methods will be described in detail.

First of all, description will be given of the first method in which an oxidant is removed with reference to Fig. 1. Specifically, firstly, the water treatment device 10 is disposed to a flow path for to-be-treated water 22. Here, the to-be-treated water 22 denotes, for example, tap water that contains an oxidant such as hypochlorous acid. As described above, the oxidant in this embodiment denotes a substance contributing to the sterilization of the to-be-treated water 22 by causing oxidation. Here, examples of a microorganism include protozoa, bacteria, mold, yeast, parasites and viruses, or biologically active proteins and viruses.

As described above, tap water that is discharged from the tip end of a water pipe, contains free residual chlorine (oxidant) of at least 0.1 mg/L to sustain the sterilization effect in the flow path. Herein, the free residual chlorine is a collective term for chlorine, hypochlorous acid and hypochlorite ion. Nevertheless, when the amount of free residual chlorine in the tap water exceeds, for example, 1.0 mg/L or above, it causes problems where the taste of the tap water becomes poor, where the smell of the pool or public path becomes unpleasant, and so on. For this reason, in the first method, the oxidant in the to-be-treated water 22 such as tap water is removed.

The specific configuration of the water treatment device 10 is the same as that described in the first embodiment. The second electrode 14, a spacer 18, a fiber electrode 16 and a first electrode 12 are disposed from the upstream side to the downstream side of the flow path for the to-be-treated water 22.

Subsequently, the water treatment device 10 thus disposed is provided with a DC voltage. Specifically, a power supply 20 applies a negative potential to the first electrode 12, and applies a positive potential to the second electrode 14. Thereby, the fiber electrode 16 electrically connected to the first electrode 12 is negatively charged as the first electrode 12.

Thereafter, when the negatively charged fiber electrode 16 comes into contact with hypochlorous acid serving as the oxidant, the following reaction expressed by Formula 1 takes place. Then, the hypochlorous acid is decomposed (reduced), and a chloride ion is formed. This chloride ion is basically tasteless and odorless. Thus, even when the chloride ion is mixed in the to-be-treated water 22, the problem such as the worsening chlorine smell does not occur.

Formula 1: HClO + H⁺ + e⁻ →Cl⁻ + H₂O

In this embodiment, the above decomposition is conducted with the fiber electrode 16 that is negatively charged by a negative potential applied from the power supply. The fiber electrode 16 is formed of extremely thin conductive fibers that are complexly and tightly packed. Thus, when the to-be-treated water 22 passes through the fiber electrode 16, most of oxidants and water molecules that constitute the to-be-treated water 22 come into contact with any of the conductive fibers forming the fiber electrode 16, and then decomposed. An experiment has made clear that the performance of the fiber electrode 16 formed of the carbon fibers to decompose the oxidant does not rely on the thickness of the fiber electrode 16, but relies on the breadth of the area in a direction perpendicular to a flowing direction of the to-be-treated water 22.

Furthermore, the aforementioned water treatment may be conducted, after multiple water treatment devices 10A and the like are set in series with respect to a flow path 54 as shown in Fig. 3. By setting the multiple water treatment devices 10A in series in the flow path 54, the treatment performance of the water treatment devices is improved as a whole, and a larger amount of hypochlorous acid can be decomposed and removed. Accordingly, the water treatment devices 10A and the like remove all (or most) of hypochlorous acid contained in the to-be-treated water 22 which has a high concentration of hypochlorous acid, or whose flow amount is large. Consequently, the obtained treated water 22 does not contain hypochlorous acid at all (or contains little hypochlorous acid).

Still furthermore, by adjusting the treatment performance, it is possible to intentionally leave hypochlorous acid in the water after the treatment (to-be-treated water 22) so that the remained hypochlorous acid can be caused to have a sterilization function. In this case, the performance of the single water treatment device 10A to decompose hypochlorous acid is measured in an experience. Then, the concentration of hypochlorous acid in the to-be-treated water 22 as well as the flow amount of the to-be-treated water 22 are specified. On the basis of these measurements, a total amount of hypochlorous acid to be decomposed by the water treatment devices 10A and the like is made smaller than that contained in the to-be-treated water 22 that is to be treated. In this manner, the water after the treatment (to-be-treated water 22) contains a smaller amount of hypochlorous acid than that before the treatment. As a result, the to-be-treated water 22 whose chlorine smell is reduced, and which contains an appropriate amount of hypochlorous acid for sterilization can be obtained. In this case, the number of the water treatment devices 10A and the like disposed in the flow path 54 is determined on the basis of a target concentration value of the hypochlorous acid to be left in the water after the treatment (to-be-treated water 22).

To put it another way, the number of the water treatment devices 10A and the like is determined on the basis of the amount of hypochlorous acid to be decomposed. More specifically, in a case where the concentration of the hypochlorous acid to be left in the water after the treatment (to be treated water 22) is lowered, it is necessary to decompose a large amount of hypochlorous acid. Thus, the multiple (for example, two or more) water treatment devices 10A and the like are set in series in the flow path 54. Meanwhile, in a case where a certain amount or larger (for example, 0.1 mg/L or above) of hypochlorous acid is to be left in the water after the treatment (to be treated water 22), the amount of hypochlorous acid to be decomposed is relatively small. Thus, a small number (for example, one) of the water treatment devices 10A and the like are set in the flow path 54.

Furthermore, a flowmeter 58 and a valve 60 may be set in the flow path 54 at the preceding or following stage of the water treatment devices 10A and the like. In this case, the valve 60 is adjusted so that a predetermined flow amount can be measured with the flowmeter 58. By restricting the flow amount of the to-be-treated water 22 with the valve 60, the flow amount of the to-be-treated water 22 that corresponds to the treatable amount of each of the water treatment devices 10A set in the flow path 54 can be achieved. In other words, by restricting, with the valve 60, the flow amount of the to-be-treated water 22 to less than the amount to be treated, all of hypochlorous acid contained in the to-be-treated water 22 before the treatment may be decomposed by the water treatment device 10A so that the water after the treatment (to-be-treated water 22) would not contain hypochlorous acid at all. Furthermore, by adjusting the valve 60 so that the flow amount of the to-be-treated water 22 would be greater than the treatable amount, only a fraction of hypochlorous acid contained in the to-be-treated water 22 before the treatment would be decomposed, and that hypochlorous acid of a certain amount or larger would be left in the water after the treatment (to-be-treated water 22).

In the above description, although hypochlorous acid is described as an example of the oxidant, the first method can also be employed for oxidants other than hypochlorous acid. Specifically, any of hypohalous acid, ozone, hydrogen peroxide, hypochlorite ion and chlorine, or a combination of two or more of these is considered as the oxidant.

For example, when the oxidant is ozone, the ozone is decomposed (reduced) as in the following chemical reaction expressed by Formula 2.

Formula 2: O₃ + 2H⁺ + 2e⁻ → O₂ + H₂O

Furthermore, when the oxidant is a hydrogen peroxide solution, the hydrogen peroxide solution is decomposed as in the following chemical reaction expressed by Formula 3. Formula 3: 2H₂O₂ + 4e⁻ → O₂ + 2H₂O

Furthermore, in the first method to remove the oxidant from the water to be treated, the second electrode 14 on a positive-electrode side only needs to have a function as an electrode. Thus, it is not necessary to cover the surface of the second electrode 14 with a noble metal, and the second electrode 14 may be formed of an anti-corrosion metal such as stainless steel. This point is in common with the first electrode 12. Additionally, the main effect of this first method is to decompose the oxidant with the fiber electrode 16. Accordingly, the positional relationship between the first electrode 12 and the second electrode 14 may be altered.

Next, description will be given of the second method in which the to-be-treated water 22 is treated. The second method does not simply remove the oxidant in the to-be-treated water 22 by the fiber electrode 16, but generate an oxidant with the water treatment device 10. Specifically, an oxidant is generated at the second electrode 14; the to-be-treated water 22 is sterilized between the second electrode 14 and the fiber electrode 16; and the oxidant contributed to the sterilization is decomposed by the fiber electrode 16.

At first, in order to conduct both of the generation and decomposition of the oxidant in the water treatment device 10, the surface of the second electrode 14 that is the positive electrode needs to be made of a substance capable of generating the oxidant. Examples of such a substance are ruthenium (Ru), rhodium (Rh), palladium (Pd), tantalum (Ta), silver (Ag), osmium (Os), iridium (Ir), platinum (Pt) or gold (Au). Alternatively, an alloy that contains at least one substance among these is used. Meanwhile, the first electrode 12 should be made of a conductive material having an excellent anti-corrosion property, since the first electrode 12 serves as conductive means for the fiber electrode 16.

Details of the second method are basically the same as the above-described first method, but the difference from the first method is a chemical reaction that takes place at the second electrode. Specifically, since the oxidant is generated at the second electrode 14, the to-be-treated water 22 needs to contain a substance that can be the oxidant. More specifically, when hypochlorous acid is generated as the oxidant at the second electrode 14, the water to be treated before the treatment needs to contain chlorine (chloride ion). Moreover, when ozone or a hydrogen peroxide solution is employed as the oxidant to be generated, water serves as a part of the oxidant.

A process of the second method is specifically described, taking hypochlorous acid as an example. Firstly, when the to-be-treated water 22 containing a chloride ion comes into contact with the second electrode 14, reactions expressed by the following Formulae 4 and 5 take place. Then, hypochlorous acid is generated.

Formula 4: 2Cl⁻ → Cl₂ + 2e⁻

Formula 5: Cl₂ + H₂O → HClO + HCl

The generated hypochlorous acid sterilizes microorganisms in the to-be-treated water 22 between the second electrode 14 and the fiber electrode 16 (that is, an area where the spacer 18 is disposed). Thereby, all (or most) of the microorganisms in the to-be-treated water 22 are removed.

Here, the microorganisms in the water to be treated 22 may include, in some cases, protozoa which are so small that it is difficult to sterilize them with hypochlorous acid and the like. According to this embodiment, by applying a positive potential with a high voltage to the second electrode 14 to generate high-concentration hypochlorous acid, it is possible to sterilize and eliminate even the small protozoa.

The hypochlorous acid contributed to the sterilization moves to the downstream side, comes into contact with the surface of the fiber electrode 16, and is decomposed (reduced). The reaction formula for this decomposition is expressed by the following Formula 6. Note that Formula 6 is the same as Formula 1.

Formula 6: HClO + H⁺ + e⁻ → Cl⁻ + H₂O

With the reaction expressed by Formula 6, all (or most) of hypochlorous acid generated at the second electrode 14 is converted into a chloride ion and water. Moreover, since the fiber electrode 16 is formed of extremely thin conductive fibers that are complexly woven, the microorganisms thus sterilized are trapped by the fiber electrode 16. Furthermore, the hypochlorous acid thus generated can also be used to sterilize microorganisms trapped by the fiber electrode 16, and the voltage can also be applied to them. Thereby, the microorganisms included in the water (to-be-treated water 22) treated with the water treatment device 10 are sterilized, and removed therefrom.

The sterilized water (to-be-treated water 22) as described above passes through the water-permeable first electrode 12, and is discharged outside the system.

In the second method, the generation of and the sterilization with hypochlorous acid are conducted in the device 10, and the generated hypochlorous acid is removed therein. Thereby, the amount of hypochlorous acid in the water to be treated after the treatment (to-be-treated water 22), which is obtained through the water treatment device 10, is equal to or less than the amount of hypochlorous acid in the water to be treated 22 before the treatment. Thus, the worsening of the chlorine smell due to the water treatment with the water treatment device 10 does not occur.

Here, besides the above-described hypochlorous acid, ozone or a hydrogen peroxide solution can be employed as the oxidant. When ozone or a hydrogen peroxide solution is employed as the oxidant, water serves as a material of the oxidant.

For example, when ozone is employed as the oxidant, the ozone is generated at the second electrode 14 by any one of the following reaction formulae expressed by Formulae 7 and 8.

Formula 7: 3H₂O → 6H⁺ + 6e⁻+ O₃

Formula 8: H₂O + O₂ → 2H⁺ + 2e⁻+ O₃

The ozone contributed to the sterilization, then, comes into contact with the surface of the fiber electrode 16 (first electrode 12), and is decomposed (reduced) by Formula 9 as follows.

Formula 9: O₃ + 2H⁺ + 2e⁻ → O₂ + H₂O

Furthermore, when a hydrogen peroxide solution is employed as the oxidant, the hydrogen peroxide solution is generated at the second electrode 14 by the following reaction expressed by Formula 10.

Formula 10: 2H₂O → H₂O₂ + 2H⁺ + 2e⁻

Then, on the fiber electrode 16 side, the hydrogen peroxide solution is decomposed by Formula 11 as follows.

Formula 11: 2H₂O₂ + 4e⁻ → O₂ + 2H₂O

### [Third embodiment: description of experimental results]

Next, description will be given of results of experiments conducted to verify the above-described water treatment device and water treatment method with reference to Figs. 7 to 10. By conducting these experiments, the water treatment device and the water treatment method according to the preferred embodiments of the present invention has been found to be significantly effective in sterilization and removal of an oxidant.

First of all, with reference to Fig. 7, description will be given of an experiment to remove free residual chlorine contained in water to be treated by using a water treatment device 10 shown in Fig. 1. Here, the free residual chlorine includes chlorine, hypochlorous acid and a hypochlorite ion.

At first, description will be given of a specific configuration of the water treatment device 10 used in the experiments with reference to Fig. 1. In the water treatment device 10 used in this experiment, a fiber electrode 16 is a carbon fiber electrode formed of carbon fibers. The diameter of the fiber electrode 16 is 40 mm (the area is approximately 1256 mm²), and the thickness thereof is 14 mm. Moreover, when accommodated into the water treatment device 10, the fiber electrode 16 is compressed to have a thickness of approximately 10 mm. Furthermore, mesh-shaped titanium with its surface covered with platinum was used as a first electrode 12 and a second electrode 14. Moreover, a spacer 18 employed is a filled-up PP resin (non-conductive material). The distance between the lower end of the fiber electrode 16 and the second electrode 14 is 10 mm.

An experimental method will be described. Water to be treated, having a predetermined free residual chlorine concentration, is caused to flow in a predetermined flow through the water treatment device 10 having the above-described configuration. At this time, the two electrodes (the first electrode 12 and the second electrode 14) are applied with voltages so that a predetermined current can pass through the water treatment device 10. After the water (to-be-treated water 22) passes through the water treatment device 10, the concentration of the free residual chlorine remained in the to-be-treated water 22 was measured.

In a graph shown in Fig. 7, the longitudinal axis indicates a free residual chlorine concentration (mg/L) of the water (to-be-treated water) after the treatment, and the lateral axis indicates a value of a current that passes between the two electrodes applied with the voltages. Here, a larger current value suggests a higher voltage value thus applied.

Moreover, in this graph, a solid line with rhombus shaped points indicates a result that water to be treated with a flow rate of 400 mL/min passes through the water treatment device 10 of this embodiment having the above-described configuration. A solid line with square shaped points indicates a result that the water to be treated with a flow rate of 800 mL/min passes through the water treatment device 10 of this embodiment having the similar configuration as above. Meanwhile, a solid line with triangle shaped points indicates a result that the water to be treated with a flow rate of 400 mL/min passes through the conventional water treatment device described in Patent Document 1. The difference between the conventional water treatment device and the water treatment device of this embodiment is the polarity of the electrode connected to the fiber electrode. Specifically, in the conventional water treatment device, a positive potential is applied to the fiber electrode (carbon fiber).

First of all, what is understood from all the experimental results is as follows. If voltages are not applied to the two electrodes (that is, if the current value indicated by the lateral axis is zero), hypochlorous acid is hardly decomposed, and the concentration of the residual chlorine contained in the water to be treated is not decreased. Moreover, when the current value is increased, a larger amount of hypochlorous acid is decomposed, and the free residual chlorine concentration is decreased. In other words, the magnitude of the current value and the free residual chlorine concentration show a negative correlation.

More specifically, at first, in the solid line with the rhombus shaped points (the water treatment device of this embodiment: 400 mL/min), in a case where the current value is 10 mA, most of hypochlorous acid is decomposed, and thereby the residual chlorine concentration is approximately 0.2 mg/L. In a case where the value of the current that passes through the electrodes is 30 mA, the free residual chlorine concentration is 0 mg/L. This suggests that, in the case where the flow rate is 400 mL/min, most of hypochlorous acid contained in the water to be treated before the treatment is easily decomposed by the water treatment device 10.

In the solid line with the square shaped points (the water treatment device of this embodiment: 800 mL/min), it is recognized that, as in the case of 400 mL/min, the residual chlorine concentration is decreased as the current value is increased. Nevertheless, in this case, a part of hypochlorous acid is decomposed by the water treatment device 10, and the rest of hypochlorous acid remains without being removed. For example, in a case where the current value is 30 mA, when the flow rate is 400 mL/min, the free residual chlorine concentration is 0 mg/L. Meanwhile, when the flow rate is 800 mL/min, the free residual chlorine having a concentration of approximately 1.8 mg/L is contained in the water (to-be-treated water) after the treatment.

In the solid line with the triangle shaped points (the conventional water treatment device: 400 mL/min), the residual chlorine concentration is decreased only slightly as the current value is increased. This is because, in the conventional water treatment device, the carbon fiber is connected to the positive electrode, so that hypochlorous acid is not decomposed by the carbon fiber.

As has been described, by adjusting the flow rate of the water to be treated supplied to the water treatment device on the basis of the above results, it is possible to adjust the concentration of the free residual chlorine contained in the water (to-be-treated water) after the treatment.

Specifically, when the free residual chlorine (oxidant) is to be eliminated from the water (to-be-treated water) after the treatment, the flow rate of the water to be treated is decreased with regulating means such as a valve. For example, suppose that the flow rate of the water to be treated is approximately 400 mL/min when the value of the current that passes through the electrodes is 30 mA. In this condition, all (or most) of the free residual chlorine contained in the water to be treated before the treatment is removed, and the treated water thus obtained does not contain the free residual chlorine at all (or hardly contains the free residual chlorine).

Meanwhile, when the free residual chlorine is to be left in the water (to-be-treated water) after the treatment, the flow rate of the water to be treated is increased by adjusting the valve. For example, suppose that the flow amount of the water to be treated is approximately 800 mL/min when the value of the current that passes through the electrodes is 30 mA. In this condition, approximately 0.19 mg/L of the free residual chlorine is left in the water (to-be-treated water) after the treatment, and the treated water thus obtained has a sterilization function owing to the remaining free residual chlorine.

In addition, the concentration of the residual chlorine in the water (to-be-treated water) after the treatment can be adjusted by altering: the value of the current that passes through the electrodes; the number of the water treatment devices to be disposed; or the area of the fiber electrode.

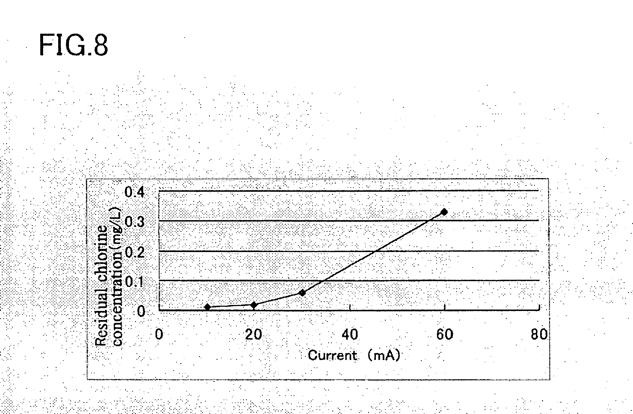

Fig. 8 is a graph showing an experimental result to verify the effect of the second water treatment method described above. In other words, this experiment was conducted to demonstrate hypochlorous acid (oxidant) generated at the second electrode 14 in the water treatment device 10 shown in Fig. 1. The lateral axis of this graph indicates a value of a current (mA) that passes between the two electrodes, and the longitudinal axis indicates a residual chlorine concentration (mg/L).

In this experiment, the water treatment device used has a configuration of the water treatment device 10 shown in Fig. 1 but the fiber electrode 16 is removed therefrom. The reason why the fiber electrode 16 is removed is that, if the experiment is conducted with the fiber electrode 16, hypochlorous acid generated at the second electrode 14 is decomposed by the fiber electrode 16, so that the amount of hypochlorous acid generated at the second electrode 14 cannot be specified.

A method for this experiment is basically the same as that described with reference to Fig. 7. The water to be treated containing chlorine (chloride ion) is introduced into the water treatment device through which electricity has been conducted. Then, the concentration of the residual chlorine in the water (to-be-treated water) treated with the water treatment device is measured.

As shown in this graph, the concentration of the residual chlorine in the water (to-be-treated water) after the treatment is increased as the current value is increased. Thus, it has been made apparent that the amount of hypochlorous acid (oxidant) to be generated can be altered by adjusting the value of the current (in other words, voltage value) that passes through the two electrodes.

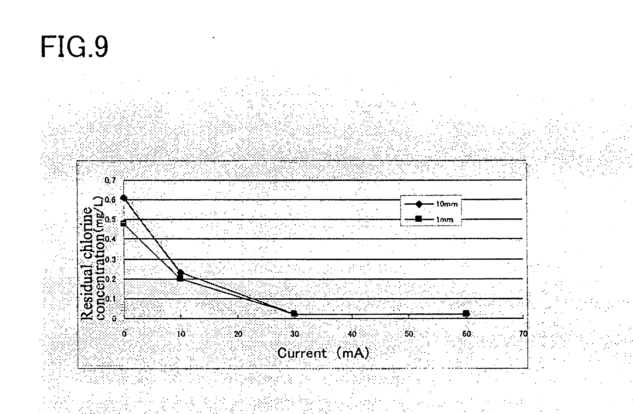

Fig. 9 is a graph showing an experimental result obtained to clarify a correlation between the treatment efficiency and the thickness of the fiber electrode 16 (for example, an electrode made of a carbon fiber) shown in Fig. 1. The lateral axis of this graph indicates a value of a current that passes through the two electrodes, and the longitudinal axis indicates a concentration of free residual chlorine in the water (to-be-treated water) after the treatment. A water treatment device and an experimental method used in this experiment are the same as those described with reference to Fig. 7. This experiment was conducted with the two fiber electrodes 16 having different thicknesses from each other.

Here, the experiment was conducted on the water treatment device provided with the fiber electrode 16 having a thickness of 10 mm (solid line with rhombus shaped points), and on the water treatment device provided with the fiber electrode 16 having a thickness of 1 mm (solid line with square shaped points), as shown in Fig. 1.

As shown in the experimental result in the graph, when the current value is 0 mA to 10 mA, the free residual chlorine concentration was high in the case where the fiber electrode 16 having a thickness of 10 mm was used, in comparison with the case where the fiber electrode 16 having a thickness of 1 mm was used. However, when the current value is 30 mA or above, the residual chlorine concentration is 0 mg/L in both cases. Thus, it was clarified that, if the fiber electrode 16 has a thickness of at least 1 mm, the residual chlorine can be sufficiently removed. It was, furthermore, clarified that the significant correlation does not exist between the thickness of the fiber electrode 16 and the effect of removing the residual chlorine, as long as the thickness is 1 mm or above.

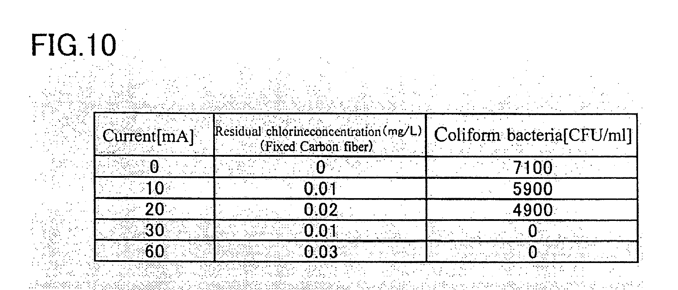

With reference to a table shown in Fig. 10, description will be given of an experimental result obtained by sterilizing coliform bacteria with the water treatment device 10 of this embodiment. A method of an experiment, whose result is shown in the table, is basically the same as that described with reference to Fig. 7. The differences therebetween are that water to be treated including the coliform bacteria was treated, and that the residual chlorine concentration of the water (to-be-treated water) after the treatment and the number of the coliform bacteria were measured. The water to be treated employed in this experiment includes a substance (for example, a chloride ion) that can generate an oxidant such as hypochlorous acid.

It is firstly understood from the table that the concentration of hypochlorous acid (residual chlorine) in the water (to-be-treated water) after the treatment does not change largely, although the current value is increased. Specifically, as the current value is increased, hypochlorous acid is also detected (when the current value is 30 mA, the residual chlorine concentration is 0.01 mg/L, for example). However, the value of this hypochlorous acid is very small as compared with the concentration of hypochlorous acid contained in tap water. This is because the fiber electrode 16 decomposes most of the hypochlorous acid generated at the second electrode 14 as shown in Fig. 1. When the value of the current applied to the electrodes is increased, a larger amount of hypochlorous acid is generated at the second electrode 14. At the same time, however, the decomposition effect of the fiber electrode 16 is also increased. Thus, even when a large amount of current passes through the electrodes (that is, when a large amount of voltage is applied to each electrode), the amount of hypochlorous acid contained in the water (to-be-treated water 22) after the treatment is hardly increased, while the sterilization effect is increased.

Next, refer to the number of the coliform bacteria. The increase in the current value decreases the number of the coliform bacteria in the water (to-be-treated water) after the treatment. Specifically, when the current value is 30 mA or above, the number of the coliform bacteria in the treated water is 0 CFU/mL.

According to the above experiments, even when the water to be treated before the treatment does not contain an oxidant such as hypochlorous acid, the water treatment device 10 of this embodiment generates an oxidant (for example, hypochlorous acid) at the second electrode 14, and decomposes the generated oxidant with the fiber electrode 16 (first electrode 12). In this manner, the device 10 sterilizes the water to be treated between the two electrodes with the thus generated oxidant. Thereby, the water treatment method (sterilization method) which causes the water (to-be-treated water) after the treatment not to contain the oxidant, is implemented. Moreover, the same effect is also accomplished with other oxidants such as ozone and a hydrogen peroxide solution.

According to the preferred embodiments of the present invention, by utilizing a fiber electrode, an oxidant such as hypochlorous acid can be removed from water to be treated, thus suppressing the deterioration in taste due to chlorine smell and the corrosion of a metallic component such as a faucet.

Moreover, according to the preferred embodiments of the present invention, chlorine contained in the water to be treated is brought into contact with a second electrode on a positive-electrode side, and thus an oxidant such as hypochlorous acid is generated. The oxidant thus generated is decomposed by the fiber electrode connected to a first electrode on a negative-electrode side. Thereby, hypochlorous acid having a high sterilizing effect exists in the flowing water to be treated between the two electrodes, and thus the sterilization is conducted. Furthermore, the hypochlorous acid contributed to the sterilization is decomposed at the fiber electrode that is connected to the first electrode on the downstream side. In this manner, the generation of the oxidant, the sterilization with the oxidant thus generated, and the decomposition of the oxidant are conducted inside the water treatment device. Thereby, the increase in the oxidant amount included in the treated water is suppressed, and accordingly the treated water is sterilized.

## Claims

1. A water treatment device comprising:
a fiber electrode (16) which is disposed in a flow path for water to be treated, which decomposes an oxidant contained in the water (22) to be treated while being electrically connected to an electrode applied with a negative potential.

2. The water treatment device according to claim 1, further comprising:
a first electrode (12) which is connected to the fiber electrode (16) and is applied with a negative potential;
a second electrode (14) which is disposed apart from the fiber electrode (16) and is applied with a positive potential; and
supplying means (20) which applies the potentials to the first electrode and the second electrode.

3. The water treatment device according to claim 2, wherein
the first (12) electrode connected to the fiber electrode (16) is disposed downstream of the second electrode in the flow path.

4. The water treatment device according to any of claims 1 to 3, further comprising:
regulating means (60) which regulates a flow rate of the water (22) to be treated, wherein
the regulating means (60) regulates the flow rate to adjust a decomposition amount of the oxidant contained in the water (22) to be treated.

5. The water treatment device according to any of claims 1 to 4, wherein
a plurality of the fiber electrodes (16) are set in series in the flow path for the water (22) to be treated.

6. The water treatment device according to any of claims 2 to 5, wherein
the fiber electrode (16) is connected to the first electrode (12) with a conductive binder.

7. A water treatment device disposed in a flow path for water to be treated, the water containing a substance that can become a part of an oxidant, the water treatment device comprising:
a fiber electrode (16);
a first electrode (12) which is disposed downstream in the flow path for the water (22) to be treated and connected to the fiber electrode (16), and which is applied with a negative potential;
a second electrode (14) which is disposed apart from the fiber electrode (16) and upstream of the first electrode (12) in the flow path, and which is applied with a positive potential; and
supplying means (20) which applies the potentials to the first electrode (12) and the second electrode (14), wherein
the substance contained in the water to be treated is brought into contact with the second electrode (14) thereby to generate the oxidant, and
at least a fraction of the generated oxidant is decomposed by the fiber electrode (16).

8. The water treatment device according to claim 7, further comprising:
regulating means (60) which regulates a flow rate of the water (22) to be treated, wherein
the regulating means (60) regulates the flow rate to adjust a decomposition amount of the oxidant.

9. The water treatment device according to claim 7 or 8, wherein
at least a surface of the second electrode (14) is made of a substance capable of generating the oxidant.

10. The water treatment device according to any of claims 7 to 9, wherein
the substance is any one of chlorine and water, and
the oxidant is any one of hypochlorous acid, ozone and a hydrogen peroxide solution.

11. The water treatment device according to any of claims 7 to 10, wherein
the fiber electrode (16) is connected to the first electrode (12) with a conductive binder.

12. A water treatment method comprising a step of applying a negative potential to a fiber electrode (16) disposed in a flow path for water (22) to be treated thereby to decompose an oxidant contained in the water (22) to be treated.

13. A water treatment method for sterilizing water to be treated, the water containing a substance that can be a part of an oxidant, the water treatment method comprising the steps of:
disposing a second electrode (14) and a first electrode (12) in a flow path for the water (22) to be treated from an upstream side in this order, the first electrode (12) being electrically connected to a fiber electrode (16) and applied with a negative potential, and the second electrode (14) being applied with a positive potential;
generating the oxidant by bringing the substance contained in the water (22) to be treated into contact with the second electrode (14);
sterilizing the water (22) to be treated with the oxidant between the first electrode (12) and the second electrode (14); and
decomposing at least a fraction of the oxidant with the fiber electrode (16) electrically connected to the first electrode (12).
